(19) Europäisches Patentamt
European Patent Office
Office européen des brevets

(11) EP 0 936 445 B1

(12) **EUROPÄISCHE PATENTSCHRIFT**

(45) Veröffentlichungstag und Bekanntmachung des Hinweises auf die Patenterteilung:
**05.07.2006 Patentblatt 2006/27**

(51) Int Cl.:
*G01D 5/34* (2006.01)    *G01D 5/26* (2006.01)
*G01B 11/26* (2006.01)

(21) Anmeldenummer: **99101370.7**

(22) Anmeldetag: **26.01.1999**

(54) **Verfahren zur Messung von Rotationswinkeln zwischen zwei Bezugssystemen**

Procedure to measure angles of rotation between two related systems

Procédé de mesure de l'angle de rotation entre deux systèmes reliés

(84) Benannte Vertragsstaaten:
**AT CH DE ES FR GB IT LI NL SE**

(30) Priorität: **12.02.1998 DE 19805585**

(43) Veröffentlichungstag der Anmeldung:
**18.08.1999 Patentblatt 1999/33**

(73) Patentinhaber: **EADS Astrium GmbH**
**81663 München (DE)**

(72) Erfinder:
• **Treichel, Rainer Dr.**
**88682 Salem (DE)**

• **Krieger, Joachim**
**88094 Oberteuringen (DE)**
• **Sesselmann, Rainer Dr.**
**88090 Immenstaad (DE)**

(74) Vertreter: **Meel, Thomas**
**Patentassessor,**
**c/o Dornier GmbH**
**L H G**
**88039 Friedrichshafen (DE)**

(56) Entgegenhaltungen:
**EP-A- 0 810 417**      **WO-A-96/10729**
**US-A- 3 932 039**      **US-A- 5 424 535**
**US-A- 5 838 432**

EP 0 936 445 B1

**Beschreibung**

Die Erfindung betrifft ein Verfahren zur Messung von Rotationswinkeln zwischen zwei Bezugssystemen.

Es gibt eine Reihe von Anwendungen, bei denen es darauf ankommt, die Winkellage im Bezug zur Verbindungslinie der Koordinatensysteme zweier voneinander getrennter Funktionseinheiten zu kennen. Aus US-3932039 Z.B. ist bekannt wie mit Hilfe von polarisiertem Licht eine derartige Winkellage bestimmt werden kann.

Aufgabe der Erfindung ist es, ein Verfahren zu schaffen, mit dem die aktuelle Winkellage zweier Bezugssysteme um deren Verbindungslinie

- absolut oder relativ,
- auf einige Bogensekunden genau,
- permanent kalibriert,
- und prinzipiell über jede beliebige Entfernung (z.B. Weltraum) gemessen werden kann.

Diese Aufgabe wird durch das Verfahren nach Anspruch 1 gelöst. Vorteilhafte Ausführungen sind Gegenstand weiterer Ansprüche.

Das erfindungsgemäße Verfahren umfaßt die folgenden Verfahrenssschritte:

- in einer Sendeeinheit, die mit dem ersten Bezugssystem verbunden ist, wird das Licht zweier Laserdioden an einen polarisierenden Strahlkombinierer gelenkt, wobei das Licht der Laserdioden linear polarisiert ist, die Polarisationsebenen senkrecht zueinander stehen, und die Intensität der Laserdioden mit einer ersten Taktfrequenz so getaktet wird, daß zu aufeinanderfolgenden Zeitpunkten

    - nur die erste Laserdiode Licht abstrahlt oder
    - nur die zweite Laserdiode Licht abstrahlt;

- an dem polarisierenden Strahlkombinierer wird das Licht der beiden Laserdioden unter Beibehaltung der jeweiligen Polarisationsebenen in eine gemeinsame optische Achse eingekoppelt;
- in einer Empfangseinheit, die mit dem zweiten Bezugssystem verbunden ist, wird das von dem polarisierenden Strahlkombinierer kommende Licht an einem polarisierenden Strahlteiler in Abhängigkeit von der Orientierung der Polarisationsebenen des einfallenden Lichts der Laserdioden zu der parallelen und der senkrechten Achse des polarisierenden Strahlteilers in zwei Teilstrahlen aufgespalten, und die Teilstrahlen auf jeweils einen Photodetektor gelenkt;
- aus den Meßwerten der Photoströme der beiden Photodetektoren, aufgenommen zu einem Zeitpunkt, bei dem nur die erste Laserdiode abstrahlt und zu einem weiteren Zeitpunkt, bei dem nur die zweite Laserdiode abstrahlt, wird der Rotationswinkel im Bezug auf eine vorgegebene Nullage der Rotation ermittelt.

Mit dem erfindungsgemäßen Verfahren, bei dem eine Modulation der Polarisation zweier Laserdioden mit gekreuzten Polarisationsebenen erfolgt, ist eine absolute Winkellagebestimmung bis zu 180° möglich. Dabei kann die Messung unabhängig von den Laserdiodenintensitäten, den Transmissionen der Polarisatoren und der Empfindlichkeit der Photodioden sowie deren zeitlichen Schwankungen durchgeführt werden. Die Modulation der Polarisation ist in einem weiten Frequenzbereich bis einige kHz möglich.

Die gekreuzte Stellung der Polarisationsebenen, die durch den polarisierenden Strahlkombinierer fixiert ist, ermöglicht einerseits eine nahezu verlustfreie Zusammenführung der beiden Laserdiodenintensitäten und andererseits die Bestimmung der Nullage und damit auch eine genaue Kenntnis der Genauigkeit der aktuellen Messung.

Im Hinblick auf Weltraumanwendungen enthält das erfindungsgemäße Verfahren zusätzlich eine Teilredundanz, da auch mit nur einer Laserdiode oder einer Photodiode weiterhin Rotationswinkel gemessen werden können, allerdings dann nur noch mit verminderter Genauigkeit.

Das erfindungsgemäße Verfahren besitzt den weiteren Vorteil, daß es prinzipiell bei jeder beliebige Entfernung der beiden Bezugssysteme anwendbar ist, was insbesondere für Anwendungen im Weltraum von Bedeutung ist.

Die zusätzliche hochfrequente Amplitudenmodulation der beiden Laserdioden gewährleistet in Verbindung mit Lock-in-Verstärkern die Erkennung des Senderlichtes auch bei hohem Fremdlichtanteil.

Die Erfindung eignet sich insbesondere für folgende Anwendungsgebiete:

- relative Orientierungsbestimmung zweier Satelliten;
- Messung von Verdrehwinkel von Richtantennen an Masten;
- präzise Messung und Kontrolle verschiedener Bezugssysteme in der optischen Interferometrie;
- Ebenheitsprüfung von Meßtischen, Transportbänder, Schienen;

- Messung von kleinsten Polarisationsrotationseffekten, wie sie in transparenten Flüssigkeiten, Festkörpern, Gasen oder reflektierenden Oberflächen vorkommen können;
- Prüfung und Überwachung von Gebäuden, Brücken und Türmen beim Bau sowie deren Stabilität bei Windbelastung;
- Vermessung tektonischer Bewegungen in der Geophysik.

Die Erfindung wird im folgenden anhand beispielhafter Ausführungen sowie unter Bezugnahme auf Zeichnungen näher erläutert. Es zeigen:

Fig. 1    zwei Bezugssysteme sowie der zu messende Rotationswinkel zwischen diesen Bezugssystemen;
Fig. 2    die Funktion eines polarisierenden Strahlkombinierers;
Fig. 3    die Funktion eines polarisierenden Strahlteilers;
Fig. 4    der Aufbau der Sendeeinheit;
Fig. 5    der Aufbau der Empfangseinheit;

Fig. 6    das Taktschema der Laserdioden hinsichtlich Intensität und Polarisation;
Fig. 7    an den Photodioden auftreffende Intensitäten sowie zugehörige Photoströme bei einer Auslenkung von -10° aus der Nullage;
Fig. 8    Blockschaltbild eines erfindungsgemäßen Sensors für terrestrische Anwendungen;
Fig. 9    Blockschaltbild eines erfindungsgemäßen Sensors für große Entfernungen im Weltraum.
Fig. 10   eine Darstellung der Genauigkeit der Winkelmessung in Abhängigkeit vom Winkel.

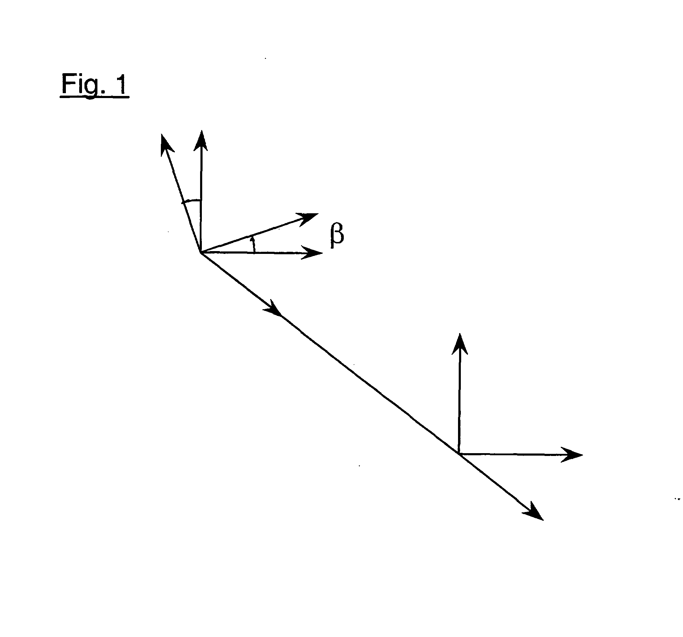

Fig. 1 zeigt die Definition des zu messenden Rotationswinkels $\beta$, wie in der Beschreibungseinleitung erläutert. Er ist bezogen auf die Verbindungslinie der beiden Bezugssysteme.

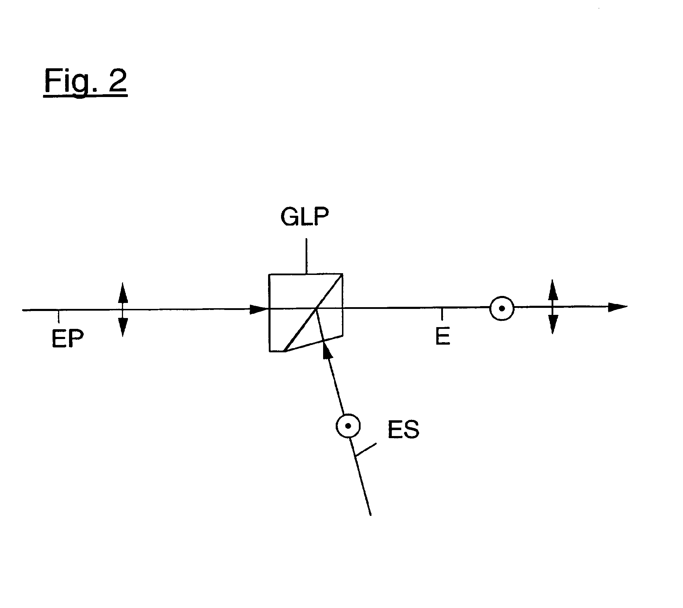

Fig. 2 zeigt skizzenhaft die Arbeitsweise eines polarisierenden Strahlkombinierers GLP, mit dem zwei Strahlen ES,EP mit geringem Polarisationgrad, die zueinander gekreuzte Polarisationebenen haben, nahezu verlustfrei und mit hohem Polarisationsgrad auf eine gemeinsame optische Achse E eingekoppelt werden. Hierzu wird zum Beispiel ein spezieller Glan-Laser-Polarisator (Fa. ZETA, USA) mit speziell geschliffenen optischen Eintrittsflächen zur Strahlkombinierung verwendet.

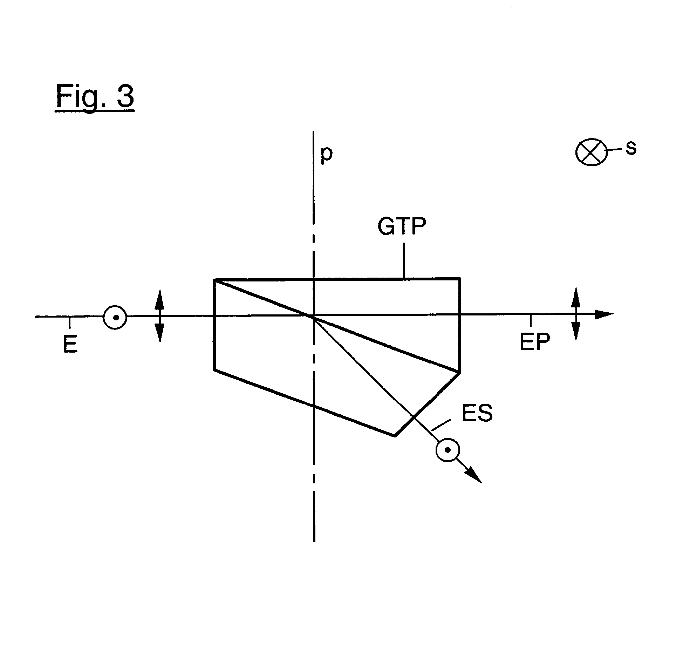

Fig. 3 zeigt skizzenhaft die Arbeitsweise eines polarisierenden Strahlteilers GTP, vom Typ Glan-Thompson, wie er beispielhaft in der vorliegenden Erfindung eingesetzt wird. Er ist in der gezeigten Ausführung (Fa. ZETA, USA) realisiert durch zwei verkittete Kalzit-Prismen. Bei dem polarisierenden Strahlteiler GTP sind zwei, aufeinander senkrechte Achsen vorhanden, im folgenden parallele Achse p und senkrechte Achse s genannt. Die Anteile des einfallenden Lichts E, die parallel zur p-Achse polarisiert sind, werden ohne Ablenkung durchgelassen EP, während die Anteile, die parallel zur s-Achse polarisiert sind, um 45° abgelenkt werden ES. Das Element GTP wirkt hier als Analysator.

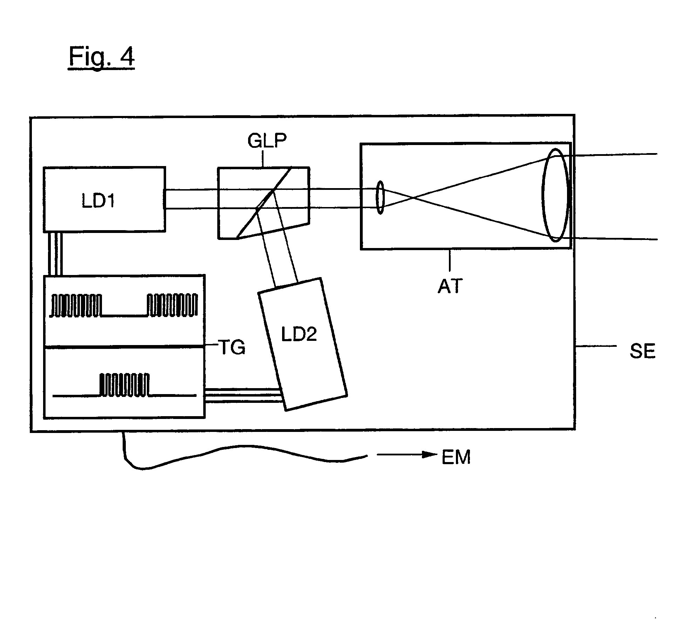

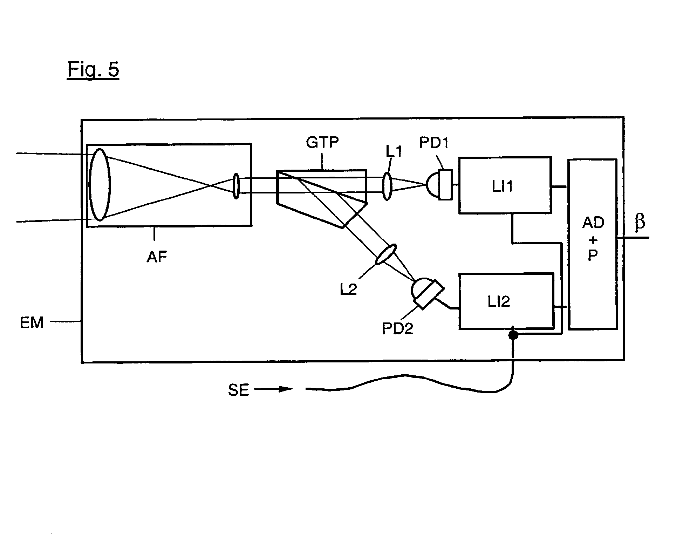

Gemäß der Erfindung werden jeweils Sendeeinheit (Fig. 4) und Empfangseinheit (Fig. 5) auf die zu vermessenden Bezugssysteme befestigt. Die Empfangseinheit wird dort befestigt, wo das Meßsignal zur weiteren Anwendung bzw. Auswertung benötigt wird.

In der Sendeeinheit SE gemäß Fig. 4 sind zwei Laserdioden LD1 und LD2 gleichen Typs als Lichtquelle installiert, die bereits jeweils weitestgehend linear polarisiertes Licht aussenden. Die Intensitäten der beiden Laserdioden LD1, LD2 werden vorteilhaft möglichst identisch gewählt (es sind aber ohne weiteres auch unterschiedliche Intensitäten möglich), indem baugleiche Laserdioden sowie identische Treiberströme verwendet werden. Die Polarisationsebenen der Laserdioden LD1, LD2 sind senkrecht zueinander orientiert, so daß die von den Laserdioden ausgehenden Strahlbündel in einem polarisierenden Strahlkombinierer GLP in eine gemeinsame optische Achse eingekoppelt werden können. Zuvor formt jeweils eine Strahlformungsoptik innerhalb der Lasermodule das stark divergente Strahlbündel der Laserdioden in ein annähernd paralleles und auf die Apertur des nachfolgenden Kombinierer GLP abgestimmtes Strahlbündel um. Der polarisierende Strahlkombinierer GLP mit einem hohen Extinktionsverhältnis verbessert die lineare Polarisation auf ca. $10^{-5}$ oder besser und fixiert bzw. stabilisiert somit die optische Referenzebene an die mechanische Referenzebene des Gehäuses der Sendeeinheit. Mit dem nachgeschalteten Aufweitungsteleskop AT wird die Divergenz des aussendenden Strahlbündels so eingestellt, daß unter allen Bedingungen, das heißt mögliche laterale Bewegung und/oder Verkippung der beiden Bezugssysteme zueinander, eine Beleuchtung der Empfängerapertur gewährleistet ist.

Das afokale Teleskop in der Empfangseinheit EM gemäß Fig. 5 bestimmt zum einen durch seine Apertur die zu empfangende Lichtleistung, zum zweiten begrenzt es mit seiner Feldblende im Primärfokus das Gesichtsfeld und zum dritten verkleinert es den Strahlquerschnitt auf die erforderliche Öffnung des nachfolgenden polarisierenden Strahlteilers GTP. In der hier willkürlich definierten Nullage sind die parallele Achse p und die senkrechte Achse s des Analysators GTP im Bezug auf die einfallende Polarisationsebene jeweil um 45° gedreht. Beliebige andere Winkel sind jedoch möglich. Dadurch spalten sich die beiden p- und s-Anteile zu gleichen Intensitäten auf. Beide Teilstrahlen werden durch je ein weiteres Linsensystem L1, L2 auf die zugehörigen Photodetektoren PD1 und PD2 abgebildet. Um eventuelle Inhomogenitäten auf der Detektoroberfläche auszugleichen, kann auch die Eintrittspupille des Empfängers auf die Detektorfläche abgebildet werden. Die beiden Lock-In-Verstärker LI1, LI2 dienen zur Erkennung des Senderlichtes bei hohem Fremdlichtanteil. Bezugszeichen AD bezeichnet einen Analog/Digital-Wandlers AD mit nachgeschaltetem Prozessor P.

Die beiden Laserdioden LD1, LD2 werden mit einer vergleichweise niedrigen Frequenz (z.B. 1 kHz) abwechselnd angesteuert. Für den Einsatz der Lock-In-Verstärker wird jede Laserdiode zusätzlich mit einer merklich höheren Frequenz (z.B. 100 kHz) amplitudenmoduliert.

Die Photodiodensignale gehorchen dem Malusschen Gesetz, d.h. die Intensitäten der beiden Teilstrahlen nach dem Analysator sind proportional $\cos^2(\pi/4+\beta)$ bzw. $\cos^2(\pi/4-\beta)$, wobei $\beta$ die Winkelabweichung von der oben definierten Nullage ist.

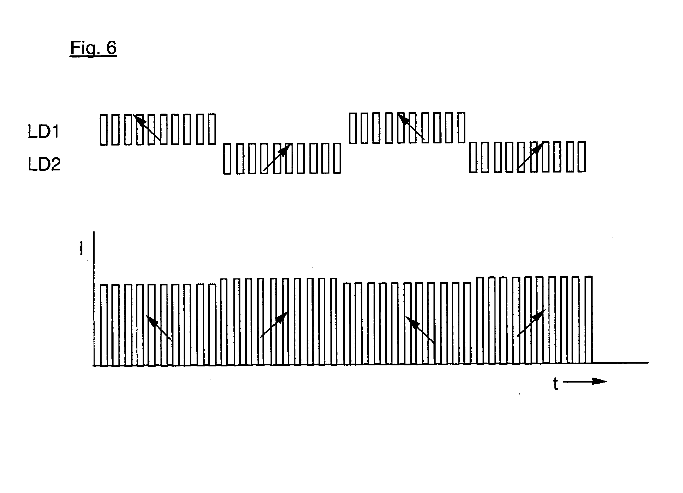

Die Fig. 6 zeigt in der oberen Hälfte das Timing der Laserdiodenansteuerung und die entsprechende aktive Polarisationsrichtungen. Die untere Bildhälfte zeigt den Signaloutput I am Senderausgang mit den entsprechenden aktiven Polarisationsrichtungen. Dabei sind unterschiedliche Intensitäten der beiden Laserdioden beispielhaft angenommen.

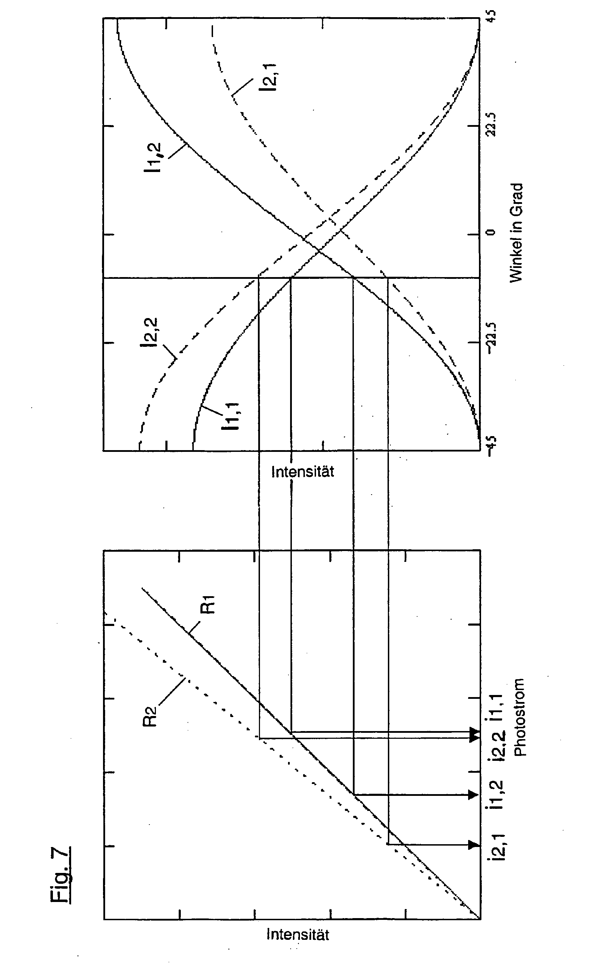

Fig. 7 zeigt in der rechten Abbildung die an den beiden Photodioden auftreffenden Intensitäten (Ordinate) in Abhängigkeit von der Auslenkung aus der Nullage (Abszisse). Dabei bezeichnet die jeweilige Funktion $I_{jk}$ die Intensität an der Photodiode j bei eingeschalteter Laserdiode k. Mittels der linken Abbildung können die zugehörigen - von der Empfindlichkeit $R_1$ der Photodiode LD1 bzw. der Empfindlichkeit $R_2$ der Photodiode LD2 abhängigen - Photoströme (Abszisse) entnommen werden.

Beispielhaft sind die Werte bei einer Auslenkung von -10° aus der Nullage eingezeichnet. Es ergeben sich an den Photodioden vier verschiedene Intensitäten (Ordinate), die vier verschiedenen Photoströmen $i_{jk}$ entsprechen.

Welche Photoströme zu erwarten sind, werden in dem folgenden Gleichungssystem (Gleichung 1-4) beschrieben.

Gleichung 1

$$i_{1,1} = R_1 \cdot \begin{bmatrix} I_{ld1,pol} \cdot T_{s,g,pol} \cdot \left[ T_{r,g,sper} + \left[ T_{r,g,pol} - T_{r,g,sper} \right] \cdot \cos(\frac{\pi}{4}+\beta)^2 \right] + \ldots \\ \\ \ldots I_{ld1,sper} \cdot T_{s,g,sper} \cdot \left[ T_{r,g,sper} + \left[ T_{r,g,pol} - T_{r,g,sper} \right] \cdot \cos(\frac{\pi}{4}-\beta)^2 \right] \end{bmatrix}$$

Gleichung 2

$$i_{1,2} = R_1 \cdot \begin{bmatrix} I_{ld2,pol} \cdot T_{s,r,pol} \cdot \left[ T_{r,g,sper} + \left[ T_{r,g,pol} - T_{r,g,sper} \right] \cdot \cos(\frac{\pi}{4}-\beta)^2 \right] + \ldots \\ \\ \ldots I_{ld2,s} \cdot T_{s,r,sper} \cdot \left[ T_{r,g,sper} + \left[ T_{r,g,pol} - T_{r,g,sper} \right] \cdot \cos(\frac{\pi}{4}+\beta)^2 \right] \end{bmatrix}$$

Gleichung 3

$$i_{2,1} = R_2 \cdot \begin{bmatrix} I_{ld1,pol} \cdot T_{s,g,pol} \cdot \left[ T_{r,r,sper} + \left[ T_{r,r,pol} - T_{r,r,sper} \right] \cdot \cos(\frac{\pi}{4}-\beta)^2 \right] + \ldots \\ \\ \ldots I_{ld1,sper} \cdot T_{s,g,sper} \cdot \left[ T_{r,r,sper} + \left[ T_{r,r,pol} - T_{r,r,sper} \right] \cdot \cos(\frac{\pi}{4}+\beta)^2 \right] \end{bmatrix}$$

Gleichung 4

$$i_{2,2} = R_2 \cdot \begin{bmatrix} I_{ld2,pol} \cdot T_{s,r,pol} \cdot \left[ T_{r,r,sper} + \left[ T_{r,r,pol} - T_{r,r,sper} \right] \cdot \cos(\frac{\pi}{4} + \beta)^2 \right] + \dots \\ \dots I_{ld2,sper} \cdot T_{s,r,sper} \cdot \left[ T_{r,r,sper} + \left[ T_{r,r,pol} - T_{r,r,sper} \right] \cdot \cos(\frac{\pi}{4} - \beta)^2 \right] \end{bmatrix}$$

$\beta$ ist die Auslenkung aus der gewählten Nullage. $\pi$/4 im Argument der cosinus-Funktion resultiert aus der oben definierten Nullage der Rotation.

$i_{j,k}$ beschreibt den Photostrom, der von der Photodiode j bei eingeschalteter Laserdiode k erzeugt wird.

$R_j$ ist die Empfindlichkeit der Photodiode j.

$I_{ldk,pol}$ ist die ausgesandte Intensität der Laserdiode k in Durchlassrichtung des nachfolgenden polarisierenden Strahlkombinierers.

$I_{ldk,sper}$ ist die ausgesandte Intensität der Laserdiode k in Sperrichtung des nachfolgenden polarisierenden Strahlkombinierers. Sie ist typischerweise ca. 100 mal schwächer als $I_{ldk,pol}$.

$T_{x,y,z}$ ist die Transmission durch den polarisierenden Strahlkombinierer im Sender bzw. durch den polarisierenden Strahlteiler im Empfänger.

Dabei kennzeichnet der erste Index (x) mit "s" den senderseitigen Strahlkombinierer und mit "r" den empfängerseitigen Strahlteiler.

Der zweite Index (y) kennzeichnet, ob es sich um den gerade durchgehenden (g) oder um den reflektierenden (r) Strahlengang handelt.

Der dritte Index (z) kennzeichnet, ob die in Durchlaßrichtung maximale Transmission (pol) oder die in Sperrichtung minimale Transmission (sper) des entsprechenden Polarisators betrachtet wird.

Zur Winkelbestimmung muß obiges Gleichungssystem nach $\beta$ aufgelöst werden. Zur Vereinfachung können alle rechten großen Summanden vernachlässigt werden. Das gleiche gilt auch für den Subtrahent in dem linken großen Summanden. Die Gleichungen lauten jetzt:

Gleichung 5

$$i_{1,1} = R_1 \cdot \left[ I_{ld1,pol} \cdot T_{s,g,pol} \cdot \left[ T_{r,g,sper} + T_{r,g,pol} \cdot \cos(\frac{\pi}{4} + \beta)^2 \right] \right]$$

Gleichung 6

$$i_{1,2} = R_1 \cdot \left[ I_{ld2,pol} \cdot T_{s,r,pol} \cdot \left[ T_{r,g,sper} + T_{r,g,pol} \cdot \cos(\frac{\pi}{4} - \beta)^2 \right] \right]$$

Gleichung 7

$$i_{2,1} = R_2 \cdot \left[ I_{ld1,pol} \cdot T_{s,g,pol} \cdot \left[ T_{r,r,sper} + T_{r,r,pol} \cdot \cos(\frac{\pi}{4} - \beta)^2 \right] \right]$$

## Gleichung 8

$$i_{2,2} = R_2 \cdot \left[ I_{ld2,pol} \cdot T_{s,r,pol} \cdot \left[ T_{r,r,sper} + T_{r,r,pol} \cdot \cos(\frac{\pi}{4} + \beta)^2 \right] \right]$$

In einem weiteren Schritt werden zunächst die Summanden $T_{r,g,sper}$ und $T_{r,r,sper}$ ZU Null angenommen. Nun kann das Gleichungssystem zu folgender Gleichung zusammengefasst werden.

## Gleichung 9

$$\frac{i_{1,2} \cdot i_{2,1}}{i_{1,1} \cdot i_{2,2}} = \frac{R_1 \left[ I_{ld2,pol} \cdot T_{s,r,pol} \cdot T_{r,g,pol} \cdot \cos(\frac{\pi}{4} - \beta)^2 \right] \cdot R_2 \left[ I_{ld1,pol} \cdot T_{s,g,pol} \cdot T_{r,r,pol} \cdot \cos(\frac{\pi}{4} - \beta)^2 \right]}{R_1 \left[ I_{ld1,pol} \cdot T_{s,g,pol} \cdot T_{r,g,pol} \cdot \cos(\frac{\pi}{4} + \beta)^2 \right] \cdot R_2 \left[ I_{ld2,pol} \cdot T_{s,r,pol} \cdot T_{r,r,pol} \cdot \cos(\frac{\pi}{4} + \beta)^2 \right]}$$

Auf der rechten Seite der Gleichung 9 kürzen sich alle Empfindlichkeiten, Transmissionen und Intensitäten heraus und es verbleiben nur die Kosinus-Quadrat-Terme übrig. Schrittweises Wurzelziehen auf der linken Seite ergibt

## Gleichung 10

$$\sqrt{\frac{\sqrt{i_{1,2} \cdot i_{2,1}}}{\sqrt{i_{1,1} \cdot i_{2,2}}}} = \frac{\cos(\frac{\pi}{4} - \beta)}{\cos(\frac{\pi}{4} + \beta)}$$

Da $\cos(\frac{\pi}{4} - \beta) = \sin(\frac{\pi}{4} + \beta)$ ist, kann die Gleichung leicht nach β aufgelöst werden:

## Gleichung 11

$$\beta = \arctan \sqrt{\frac{\sqrt{i_{1,2} \cdot i_{2,1}}}{\sqrt{i_{1,1} \cdot i_{2,2}}}} - \frac{\pi}{4}$$

Die in den Gleichungen 5 - 8 noch zu Null angenommenen Summanden $T_{r,g,sper}$ und $T_{r,r,sper}$ sind klein und von gleicher Größenordnung. Es genügt daher in Gleichung 11 statt der individuellen Korrekturströme einen gemeinsamen Korrekturstrom ic jeweils im Zähler und im Nenner zu subtrahieren, um Restfehler im Bogensekundenbereich zu eliminieren. Der Korrekturstrom ic berücksichtigt die Tatsache, daß ein geringer Beitrag durch das endliche Extinktionsverhältnis auf die jeweils andere Photodiode fällt. Das Verhältnis ic/$i_{j,k}$ liegt typischerweise bei $10^{-4}$. ic kann entweder empirisch oder aus dem Produkt der Transmission des Analysators in Sperrichtung mal der zu erwartenden Photoströme in Polarisationsrichtung errechnet werden.

## Gleichung 12

$$\beta = \arctan\sqrt{\frac{\sqrt{i_{1,2} \cdot i_{2,1}} - ic}{\sqrt{i_{1,1} \cdot i_{2,2}} - ic}} - \frac{\pi}{4}$$

Ein wesentlicher Vorteil des erfindungsgemäßen Verfahrens wird beim Übergang von Gleichung 9 zu 10 deutlich. Es kürzen sich alle Photodiodenempfindlichkeiten, Transmissionen der Polarisatoren und Intensitäten heraus, wodurch der Sensor unempfindlich gegenüber deren Schwankungen wird. Eine Kenntnis dieser Größen ist aus dem gleichen Grund nicht erforderlich. Die Unempfindlichkeit gegenüber Polarisatortransmissionen bedeutet zum Beispiel auch eine Unempfindlichkeit gegenüber der p-s Aufspaltung durch nicht senkrechtem Lichteinfall auf den Polarisator. Ein spezielle Beschichtung auf der optischen Eintrittsfläche ist daher nicht erforderlich. Dadurch ist eine kostengünstige Herstellung des Sensors möglich.

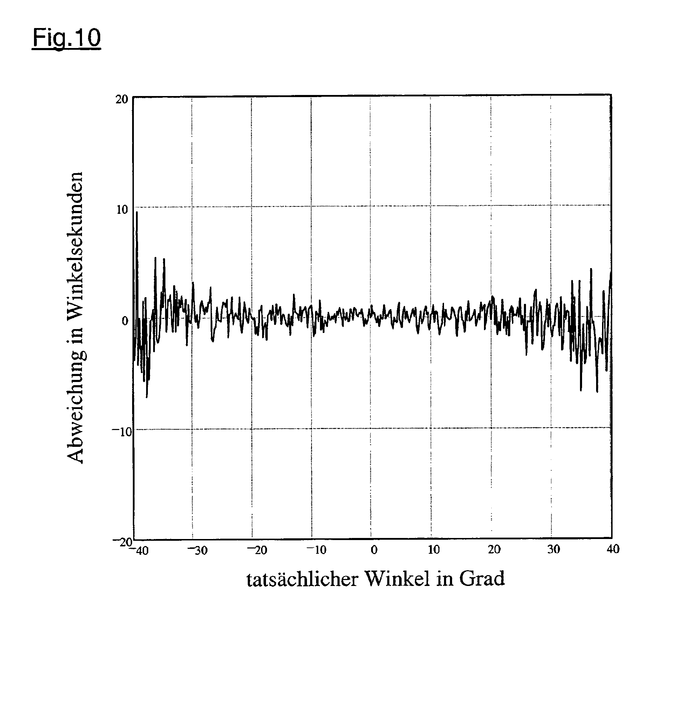

Die Genauigkeit hängt unter anderem vom Winkel selbst ab, da bei zunehmender Winkelabweichung die Intensität an einer der Photodioden schwächer wird. Fig. 10 zeigt die Fehlerbreite bei verschiedenen Winkeln unter Bedingungen, wie sie im Laboraufbau realisiert wurden.

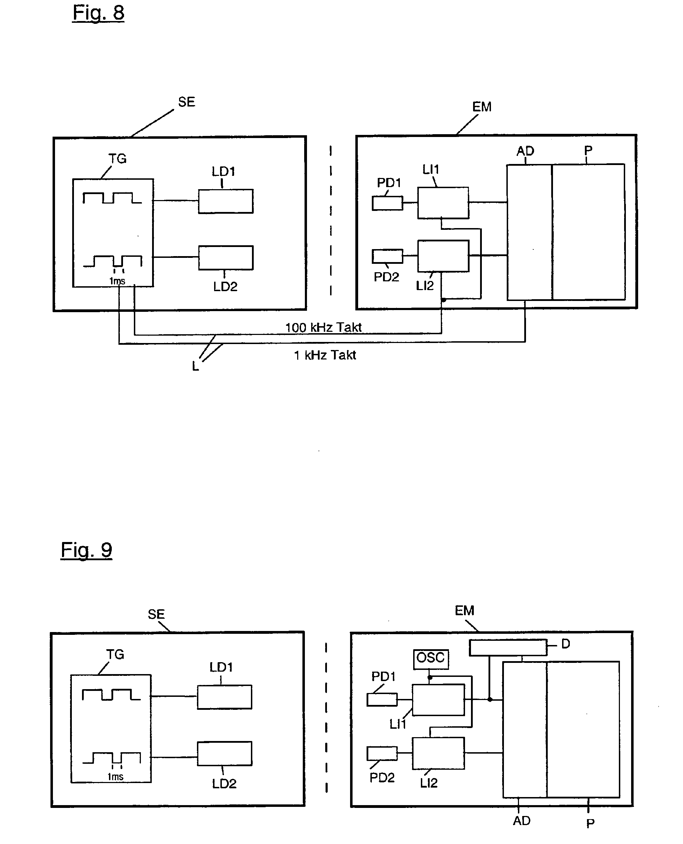

Fig. 8 zeigt das Blockschaltbild für einen erfindungsgemäßen Sensor für terrestrische Anwendungen. Die Sendeeinheit SE umfaßt die beiden Laserdiodenmodule LD1 und LD2, die vom Taktgenerator TG angesteuert werden. Wie bereits erwähnt (siehe z.B. Fig. 6) werden die Laserdiodenmodule vorteilhaft gleichzeitig mit einer niedrigen ersten Taktfrequenz, z.B. 1 kHz, für die Modulation der Polarisation, und einer wesentlich höheren zweiten Taktfrequenz, z.B. 100 kHz, zur Erkennung des Senderlichtes bei hohem Fremdlichtanteil, getaktet.

In der Empfangseinheit EM sind die zwei mit einem Lock-In-Verstärker LI1, LI2 verbundene Photodioden PD1, PD2 vorhanden. Die Ausgangssignale der Lock-In-Verstärker werden an einen Analog/Digital-Wandler AD geführt. In dem nachgeschalteten Prozessor P erfolgt die weitere rechnerische Auswertung. Die Phaseninformation für die beiden Taktfrequenzen werden mittels Leitungen L von der Sendeeinheit SE zu der Empfangseinheit EM übertragen.

Fig. 9 zeigt entsprechend das Blockschaltbild für einen erfindungsgemäßen Sensor, der speziell bei großen Entfernungen der beiden Bezugssysteme eingesetzt werden kann, z.B. für die Rotationswinkelmessung zwischen zwei Satelliten. Der Aufbau von Sendeeinheit SE und Empfangseinheit EM entspricht im wesentlichen der in Fig. 8 dargestellten Ausführungen. Jedoch wird hier als Lock-In-Verstärker ein Dual-Phase Lock-In-Verstärker LI1,LI2 in Verbindung mit frequenzstabilen Oszillatoren OSC eingesetzt. Eine Übertragung der Phaseninformation von der Sendeeinheit SE zur Empfangseinheit EM wird dann nicht mehr benötigt.

## Patentansprüche

1.   Verfahren zur Messung des Rotationswinkels zwischen zwei Bezugssystemen mit folgenden Verfahrensschritten:

- in einer Sendeeinheit (SE), die mit dem ersten Bezugssystem verbunden ist, wird das Licht zweier Laserdioden (LD1,LD2) an einen polarisierenden Strahlkombinierer (GLP) gelenkt, wobei das Licht der Laserdioden (LD1,LD2) linear polarisiert ist, die Polarisationsebenen senkrecht zueinander stehen, und die Intensität der Laserdioden (LD1,LD2) mit einer ersten Taktfrequenz so getaktet wird, daß zu aufeinanderfolgenden Zeitpunkten

  - nur die erste Laserdiode (LD1) Licht abstrahlt oder
  - nur die zweite Laserdiode (LD2) Licht abstrahlt;

- an dem polarisierenden Strahlkombinierer (GLP) wird das Licht der beiden Laserdioden (LD1,LD2) unter Beibehaltung der jeweiligen Polarisationsebenen in eine gemeinsame optische Achse eingekoppelt;
- in einer Empfangseinheit (EM), die mit dem zweiten Bezugssystem verbunden ist, wird das von dem polarisierenden Strahlkombinierer (GLP) kommende Licht an einem polarisierenden Strahlteiler (GTP) in Abhängigkeit von der Orientierung der Polarisationsebenen des einfallenden Lichts der Laserdioden (LD1,LD2) zu der parallelen (p) und der senkrechten (s) Achse des polarisierenden Strahlteilers (GTP) in zwei Teilstrahlen aufgespalten, und die Teilstrahlen auf jeweils einen Photodetektor (PD1,PD2) gelenkt;
- aus den Meßwerten der Photoströme der beiden Photodetektoren (PD1,PD2), aufgenommen zu einem Zeitpunkt, bei dem nur die erste Laserdiode (LD1) abstrahlt und zu einem weiteren Zeitpunkt, bei dem nur die zweite Laserdiode (LD2) abstrahlt, wird der Rotationswinkel im Bezug auf eine vorgegebene Nullage der Rotation ermittelt.

**2.** Verfahren nach Anspruch 1, **dadurch gekennzeichnet, daß** der Rotationswinkel β folgendermaßen bestimmt wird:

$$\beta = \arctan \sqrt{\frac{\sqrt{i_{1,2} \cdot i_{2,1}}}{\sqrt{i_{1,1} \cdot i_{2,2}}}} - \phi$$

mit

$i_{i,k}$ Photostrom der Photodiode PDj bei abstrahlender Laserdiode LDk,
φ Winkelwert, der die Definition der Nullage der Rotation beschreibt.

**3.** Verfahren nach Anspruch 1, **dadurch gekennzeichnet, daß** der Rotationswinkel β folgendermaßen bestimmt wird:

$$\beta = \arctan \sqrt{\frac{\sqrt{i_{1,2} \cdot i_{2,1}} - ic}{\sqrt{i_{1,1} \cdot i_{2,2}} - ic}} - \phi$$

mit

$i_{j,k}$ Photostrom der Photodiode PDj bei abstrahlender Laserdiode LDk,
φ Winkelwert, der die Definition der Nullage der Rotation beschreibt,
ic Korrekturstrom, der das endliche Extinktionsverhältnis des polarisierenden Strahlteilers (GTP) berücksichtigt.

**4.** Verfahren nach einem der vorangehenden Ansprüche, **dadurch gekennzeichnet, daß** als Nullage der Rotation eine Orientierung gewählt wird, bei der die parallele (p) und die senkrechte (s) Achse des polarisierenden Strahlteilers (GTP) mit den Polarisationsebenen des einfallenden Lichts der beiden Laserdioden (LD1, LD2) jeweils einen Winkel von 45° einschließt.

**5.** Verfahren nach einem der vorangehenden Ansprüche, **dadurch gekennzeichnet, daß** die Intensitäten der Laserdioden (LD1, LD2) zusätzlich mit einer zweiten Taktfrequenz getaktet werden und die Ausgangssignale der Photodioden (PD1, PD2) in jeweils einem Lock-In-Verstärker (LI1, LI2), an dem diese zweite Taktfrequenz anliegt, verstärkt werden.

**Claims**

**1.** Method for measuring the rotation angle between two reference systems with the following process steps:

- in a transmitter unit (SE) connected with the first reference system, the light from two laser diodes (LD1, LD2) is deflected at a polarising beam combiner (GLP), where the light from the laser diodes (LD1, LD2) is linearly polarised, the polarisation planes stand perpendicular to each other and the intensity of the laser diodes (LD1, LD2) is cycled with a first clock frequency such that at successive times

- only the first laser diode (LD1) emits light or
- only the second laser diode (LD2) emits light;

- at the polarising beam combiner (GLP) the light from the two laser diodes (LD1, LD2) is coupled into a common optical axis while retaining the respective polarisation plane;
- in a receiver unit (EM) connected with the second reference system, the light from the polarising beam combiner (GLP) at a polarising beam splitter (GTP) is split into two part beams according to the orientation of the polarising planes of the incident light from laser diodes (LD1, LD2) to the parallel (p) and the vertical (s) axes of the polarising beam splitter (GTP) and the part beams are each deflected onto a photodetector (PD1, PD2);
- from the measured values of the photocurrents of the two photodetectors (PD1, PD2) taken at a time at which only the first laser diode (LD1) is emitting and at a further time at which only the second laser diode (LD2) is emitting, the rotation angle in relation to a pre-specified neutral position of rotation is determined.

2. Method according to claim 1, **characterised in that** the rotation angle β is determined as follows:

$$\beta = \arctan \sqrt{\frac{\sqrt{i_{1,2} \cdot i_{2,1}}}{\sqrt{i_{1,1} \cdot i_{2,2}}}} - \phi$$

where
$i_{j,k}$ is the photocurrent from photodiode PDj with emitting laser diode LDk,
Φ is the angular value which describes the definition of the neutral position of rotation.

3. Method according to claim 1, **characterised in that** the rotation angle β is determined as follows:

$$\beta = \arctan \sqrt{\frac{\sqrt{i_{1,2} \cdot i_{2,1}} - ic}{\sqrt{i_{1,1} \cdot i_{2,2}} - ic}} - \phi$$

where
$i_{j,k}$ is the photocurrent from photodiode PDj with emitting laser diode LDk,
Φ is the angular value which describes the definition of the neutral position of rotation
ic is the correction current which takes into account the final extinction ratio of the polarising beam splitter (GTP).

4. Method according to any of the preceding claims, **characterised in that** as neutral position of rotation, an orientation is selected in which the parallel (p) and vertical (s) axes of the polarising beam splitter (GTP) each enclose an angle of 45° with the polarisation planes of the incident light from the two laser diodes (LD1, LD2).

5. Method according to any of the preceding claims, **characterised in that** the intensities of the laser diodes (LD1, LD2) are additionally cycled with a second clock frequency and the output signals of the photodiodes (PD1, PD2) are each amplified in a lock-in amplifier (L11, L12) at which the second clock frequency is present.

**Revendications**

1. Procédé de mesure de l'angle de rotation entre deux systèmes de référence, comprenant les phases de procédé suivantes :

- dans une unité émettrice (SE), reliée au premier système de référence, la lumière de deux diodes laser (LD1, LD2) est dirigée sur un combinateur de faisceaux polarisant (GLP), la lumière des diodes laser (LD1, LD2) étant alors polarisée linéairement, les plans de polarisation étant perpendiculaires entre eux, et l'intensité des diodes laser (LD1, LD2) étant cadencée par une première fréquence d'impulsions de sorte que, à des instants successifs

- seule la première diode laser (LD1) émet de la lumière ou
- seule la seconde diode laser (LD2) émet de la lumière ;

- sur le combinateur de faisceaux polarisant (GLP), la lumière des deux diodes laser (LD1, LD2) est couplée sur un axe optique commun en maintenant les plans de polarisation respectifs ;
- dans une unité réceptrice (EM), reliée au second système de référence, la lumière provenant du combinateur de faisceaux polarisant (GLP) est scindée en deux faisceaux partiels, sur un séparateur de faisceaux polarisant (GTP), en fonction de l'orientation des plans de polarisation de la lumière incidente des diodes laser (LD1, LD2) par rapport à l'axe parallèle (p) et à l'axe perpendiculaire (s) du séparateur de faisceaux polarisant (GTP), et les faisceaux partiels sont dirigés chacun sur un photo-détecteur (PD1, PD2) ;
- l'angle de rotation par rapport à une position zéro prédéfinie de la rotation est déterminé à partir des valeurs de mesure des courants photoélectriques des deux photodétecteurs (PD1, PD2), enregistrées à un instant, auquel seule la première diode laser (LD1) émet, et à un autre instant auquel seule la seconde diode laser (LD2) émet.

2. Procédé suivant la revendication 1, **caractérisé en ce que** l'angle de rotation $\beta$ est déterminé comme suit :

$$\beta = \arctan \sqrt{\frac{\sqrt{i_{1,2} \cdot i_{2,1}}}{\sqrt{i_{1,1} \cdot i_{2,2}}}} - \phi$$

équation dans laquelle
$i_{j,k}$ est le courant photoélectrique de la photodiode PDj lorsque la diode laser LDk émet,
$\Phi$ est la valeur angulaire, qui décrit la définition de la position zéro de la rotation.

3. Procédé suivant la revendication 1, **caractérisé en ce que** l'angle de rotation $\beta$ est déterminé comme suit :

$$\beta = \arctan \sqrt{\frac{\sqrt{i_{1,2} \cdot i_{2,1}} - ic}{\sqrt{i_{1,1} \cdot i_{2,2}} - ic}} - \phi$$

équation dans laquelle
$i_{j,k}$ est le courant photoélectrique de la photodiode PDj lorsque la diode laser LDk émet,
$\Phi$ est la valeur angulaire, qui décrit la définition de la position zéro de la rotation,
ic est le courant correctif, qui tient compte du coefficient d'extinction fini du séparateur de faisceaux polarisant (GTP).

4. Procédé suivant l'une des revendications précédentes, **caractérisé par** le choix, en tant que position zéro de la rotation, d'une orientation dans laquelle l'axe parallèle (p) et l'axe perpendiculaire (s) du séparateur de faisceaux polarisant (GTP) forment chacun un angle de 45° avec les plans de polarisation de la lumière incidente des deux diodes laser (LD1, LD2).

5. Procédé suivant l'une des revendications précédentes, **caractérisé en ce que** les intensités des diodes laser (LD1, LD2) sont cadencées en supplément par une seconde fréquence d'impulsions et les signaux de sortie des photodiodes (PD1, PD2) sont amplifiés chacun dans un amplificateur de blocage (LI1, LI2), sur lequel s'applique cette seconde fréquence d'impulsions.

Fig. 1

β

## Fig. 2

## Fig. 3

## Fig. 4

Fig. 5

Fig. 6

Fig. 7

## Fig. 8

## Fig. 9

## Fig.10